# EUROPEAN PATENT APPLICATION

(11) **EP 1 739 388 A1**
(43) Date of publication of application: **03.01.2007**
(21) Application number: 05024585.1
(22) Date of filing: 10.11.2005
(51) Int. Cl.: G01B 9/02

(54) **Method for manufacturing a biosensor element and for testing the same**

(30) Priority: 01.07.2005 JP 2005193786
(71) Applicant: HITACHI SOFTWARE ENGINEERING CO., LTD., Yokohama-shi, Kanagawa 230-0045 (JP)
(72) Inventor: Nakahara, Miwako Hitachi, Ltd Intel. Prop. Office, 1-chome Chiyoda-ku Tokyo 100-8220 (JP); Inoue, Takashi Hitachi, Ltd Intel. Prop. Office, 1-chome Chiyoda-ku Tokyo 100-8220 (JP); Saeki, Tomonori Hitachi, Ltd Intel. Prop. Office, 1-chome Chiyoda-ku Tokyo 100-8220 (JP); Kogi, Osamu Hitachi, Ltd Intel. Prop. Office, 1-chome Chiyoda-ku Tokyo 100-8220 (JP); Ban, Noriko Hitachi, Ltd Intel. Prop. Office, 1-chome Chiyoda-ku Tokyo 100-8220 (JP)
(74) Representative: Strehl Schübel-Hopf & Partner

(57) **Abstract**

When a biomolecule and a biochemical reactant are detected, a white interference method is used to conduct a non-contact and non-destructive detection, and further to conduct efficient and accurate detection. This method is applied to biosensor elements, whereby non-labelled and non-contact quality control can be achieved.

## Description

### Background of the Invention

The present invention relates to a method for the non-destructive/non-contact testing of a biosensor element on the surface of which nucleic acids, proteins, and the like that are immobilised for sensing of biomolecules and chemical reactions, and for manufacturing this biosensor element.

The human genome sequence has been entirely deciphered by the human genome project, and currently a subject matter of the study is shifting from the conventional "sequence analysis" to "functional analysis" that examines functions thereof. Data obtained from this functional analysis are considered to be able to provide significant information to elucidate a life phenomenon and it is expected that such data may become a key to solve problems in every field associated with living things, such as medical practice, environment, and food.

In the functional analysis above, it is demanded that a gene having enormous amounts of information and a protein made from the gene are analysed exhaustively and rapidly. Considering this situation, a biochip has been developed, which is a kind of biosensor element, typified by DNA microarrays and protein chips.

A primary detecting method using the biochip is to attach a fluorescence label to a biomolecule which is to be detected, the fluorescence label is excited by a laser, and then the emitted fluorescence is detected. In this method, it is needed to attach the fluorescence molecule onto the biomolecule to be detected. When the biomolecule is a protein, there is the concern that the structure of the protein may be drastically changed due to the attachment of the fluorescence molecule.

There is another concern in that the fluorescence label may interfere with the reaction between the chip and the biomolecule. It may be difficult to accurately estimate amount of the biomolecules, due to the yield difference in introducing the fluorescence labels, quantum yield or time course of the fluorescence labels, and variations in sensitivity of the fluorescence detecting system. There is an example of another detecting method, which employs surface plasmon resonance (SPR) (US 6,207,381).

However, in order to detect a biomolecule within a microarea, which is captured on the biochip, it is difficult to use the SPR for detecting the biochip under present circumstances, since the space resolving power of the SPR is low. Therefore, a detecting method which is capable of detecting a biomolecule without using a label, and also capable of detecting a microarea has been demanded.

Here, a general method for manufacturing the biochip will be explained. There are mainly two methods to manufacture the biochip. One is a method in which amino acid and nucleic acid bases are sequentially immobilised one by one on a substrate, by means of photolithography or ink-jet, whereby probe biomolecules such as proteins or DNAs (deoxyribonucleic acid) are synthesised on the substrate in-situ (see US 5,424,186). The other is a method in which the probe biomolecules are synthesised ex-situ, and subsequently immobilised on the substrate (US 5,700,637).

It is expected that the biochip will be used in the future, for example, in medical diagnosis such as diagnosing cancer. If the biochip is used in medical diagnosis, it is necessary that data obtained from the biochip have a high quantitativity and reproducibility. In this case, it is significant to grasp the volume and structure of the probe molecules immobilised on the biochip surface, so as to conduct a quality control.

However, in many cases, the probe biomolecules on the biochip surface are coated with a monolayer, and the film thickness of the film coating the probe biomolecules is in the angstrom order. In addition, the size of the area on which one type of probe DNA is immobilised is in the submillimeter order. In order to know the volume and structure of the probe biomolecule which is subjected to ultra-thin coating on the microarea, it is necessary to have an analysing technique with extremely high sensitivity and sufficient space resolving ability.

### Summary of the Invention

The problems described above can be solved by providing a non-labelled/non-destructive detecting method as follows. That is, when a biomolecule is detected by a biosensor element, according to this method, it is possible to detect a biomolecule in a non-destructive manner, without labelling in advance the biomolecule to be detected. The problems above can also be solved by providing an analysing method which is capable of evaluating the volume and structure of the probe biomolecules with high sensitivity and in a simple manner, wherein the probe biomolecules are immobilised in a microarea on the sensor surface, in order to conduct a quality control of the biosensor element.

One mode of detecting a biosensor element according to the present invention has a process for detecting a biomolecule, by use of the biosensor element having probe biomolecules immobilised on a substrate, including the steps of
1) mounting on a stage, a biosensor element where the probe biomolecules are immobilised,
2) irradiating the biosensor element with white light,
3) detecting an interference fringe generated by allowing light reflected from the biosensor element to interfere with light reflected from a reference plane,
4) obtaining either the distance or the optical path length between the biosensor element and the source of the white light, either of which maximises the modulation amount of the interference fringe,
5) calculating the three-dimensional shape of the surface of the biosensor element, from the distance or optical path length,
6) obtaining the height T1 of a part where the probe biomolecules are immobilised, from the three-dimensional shape thus calculated,
7) allowing the biosensor element to react with a solution containing a target biomolecule,
8) performing all of the steps 1) to 5) described above, for the biosensor element which has been subjected to the reaction with the target molecule,
9) obtaining the height T2 of a part where the probe biomolecules are immobilised, from the three-dimensional shape thus calculated, and
10) calculating the difference (T2 - T1), between T2 obtained in step 9) and T1 obtained in step 6).

Another mode of manufacturing a biosensor element according to the present invention, having probe biomolecules immobilised on a substrate, including the steps of
1) mounting on a stage either a biosensor element having the probe biomolecules being immobilised, or a biosensor substrate in a state prior to having the probe biomolecules immobilised,
2) irradiating the biosensor element or substrate with white light,
3) detecting an interference fringe generated by allowing light reflected from the biosensor element or substrate to interfere with light reflected from a reference plane,
4) obtaining either of the distance and the optical path length between the biosensor element and substrate and the source of the white light, the distance maximising the modulation amount of an interference fringe,
5) calculating the three-dimensional shape of the surface of the biosensor element or substrate from the distance or optical path length,
6) obtaining the average height T1 on a part where the probe biomolecules are immobilised, the height variation Cv1 or the surface variation Cv2, and
7) conducting quality control of the probe biomolecules with thus obtained T1, variation Cv1, and variation Cv2.

According to the present invention, by use of white light interference method, it is possible to detect a biomolecule and/or a biochemical reaction in a non-contact and non-destructive manner with the biosensor element. Furthermore, according to the present invention, it is possible to conduct a quality control, by testing the quality of the biosensor element in a non-contact and non-destructive manner, by use of the above method.

### Brief Description of the Drawing

These and other features, objects and advantages of the present invention will become more apparent from the following description when taken in conjunction with the accompanying drawings wherein:
- FIG. 1A and FIG. 1B: are charts showing a result of spot shape, film thickness, and film thickness variation, which are obtained by use of white light.
- FIG. 2: is an explanatory diagram showing a procedure to obtain a hybridisation amount, by obtaining the spot film thicknesses using white light, before and after the hybridisation.
- FIG. 3: is a correlation diagram to explain a correlation between the hybridisation amount measured by use of the white light and the hybridisation amount measured by fluorescence.

### Detailed Description of Preferred Embodiments

As a preferred embodiment, an example will be explained, where a detecting method and a manufacturing method according to the present invention have been conducted according to white light interference method.

A plane type DNA microarray was produced according to a producing method as disclosed in the Japanese Patent laid-open publication No. 2004-28953. Borosilicate glass of a slide glass size was employed as a substrate, and on this substrate, 10,000 types of 50-mer probe DNA were spotted. The diameter of one spot size is around 300 µm, and each probe DNA was immobilised on the substrate at a monolayer level.

This DNA microarray was mounted on an XYZθ stage and immediately below a 10x objective lens. At this time, the magnification of the lens may be any between 2.5x to 100x. Next, the surface of the microarray is irradiated with white light from a halogen lamp almost perpendicularly. Then, the light reflected from the microarray top surface is allowed to interfere with the light reflected from a reference plane placed in the track of the optical path. This interference light is detected by use of a CCD camera.

Here, scanning by the objective lens is conducted in the z-direction, that is, in a direction perpendicular to the microarray surface. At this time, when the optical path difference between the light reflected from the microarray top surface and the light reflected from the reference plane becomes zero, the contrast of the interference fringe (modulation amount of the interference fringe) formed by the interference light is maximised.

With respect to each pixel detected by the CCD camera, the distance between the objective lens and the microarray surface is obtained, which maximises the contrast on each pixel, whereby the three-dimensional shape of the microarray surface can be calculated. In other words, a three-dimensional shape of each spot on which probe DNAs are immobilised can be obtained.

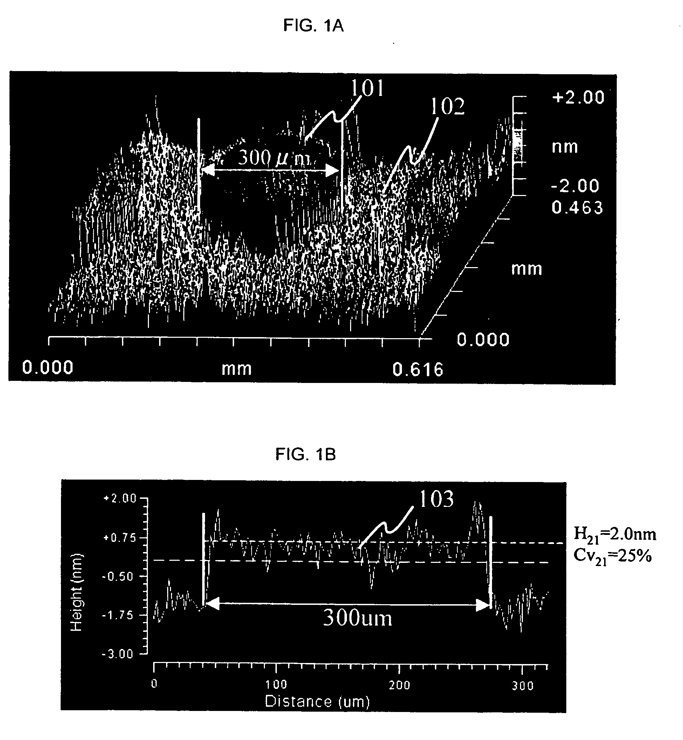

Here, the average film thickness Tn1 within each spot and the value of the height variation Cv(Tn1) (Coefficient of Variation) within each spot are obtained. Here "n" represents a spot position. FIGS. 1A and 1B show an example of the three-dimensional shape, film thickness, and Cv value of the spot, which are obtained according to the above method. In FIGS. 1A and 1 B, numeral 101 is a part where probe DNAs are spotted; numeral 102 is a part where probe DNAs are not spotted; numeral 103 is a curve which shows the height of a cross section of the probe DNAs. As shown in FIG. 1A, with respect to each spot having a coating of probe DNAs, the film thickness and film thickness variation in the spot can be obtained.

Here, the thus obtained Tn1 and Cv(Tn1) value are checked against a quality control reference range which is predetermined according to the type of microarray. In other words, T1 as an average value of Tn1, and variations of Tn1, that is, film thickness variations Cv(T1) between spots, are compared with the quality control reference range. If those values are within the quality control reference range, the microarray is determined as an accepted product and handled as a good product. On the other hand, if those values are outside the quality control reference range, it is determined as not accepted and handled as a defective product.

It is also possible to conduct a non-defective/defective judgement with respect to each spot independently. In this case, as to each spot n, if Tn1 and Cv(Tn1), the film thickness variation in the spot, are within the quality control reference range, this spot n is determined as a favourable spot and will be used for testing. On the other hand, when Tm1 and Cv(Tm1) as to each spot m are outside the quality control reference range, this spot m is determined as a defective spot and will not be used for detecting an object.

Alternatively, before immobilising the probe DNAs, the three-dimensional shape of the microarray surface can be obtained according to the same process as described above. Here, the roughness R1 of a coating layer is obtained which covers the surface in advance for immobilising the probe DNAs.

The roughness value Rms (square mean roughness) is obtained from unevenness on the surface having been measured and is expressed as the square root of a mean value as to the square of deviations, from the average line of height to the measured value. This value is checked against the quality control reference range of roughness which is predetermined according to a type of the microarray, and if the obtained value R1 is within the quality control reference range, it is handled as a good product, whereas if it is out of the quality control reference range, it is handled as a defective product. Alternatively, the roughness of the part where the probe DNAs are not spotted, as indicated by numeral 102 in FIG. 1A, is obtained according to the same process as described above, thereby conducting a similar quality control for the coating layer.

Next, the DNA microarray determined as a good product according to the above evaluation was subjected to a hybridisation reaction with a target DNA which was prepared from the total RNA extracted from a cell in accordance with a method disclosed in JP-A 2004-28953. Subsequently, it was washed and dried. The DNA microarray subjected to the above processing was mounted again on the aforementioned XYZθ stage, and immediately below the 10x objective lens. The microarray was irradiated with white light, and the light reflected from the microarray surface was allowed to interfere with light reflected from the reference plane. The objective lens was scanned perpendicular to the microarray, and then the three-dimensional shape of the array surface was obtained.

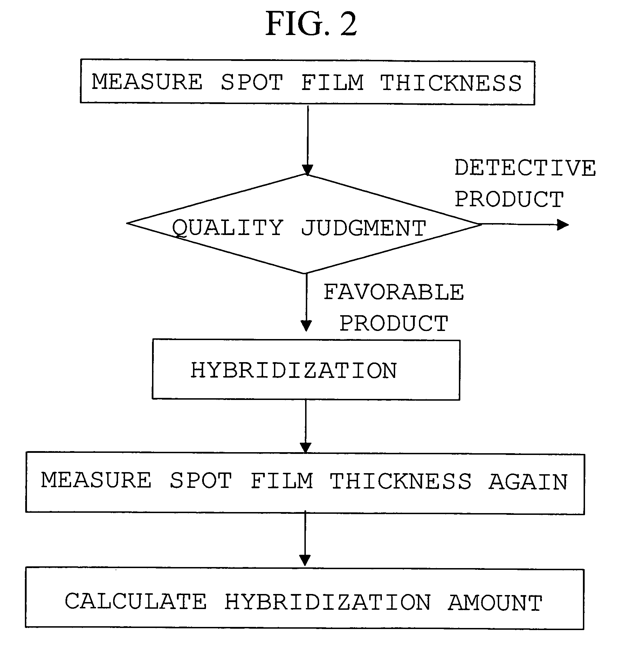

Here, each spot film thickness Tn2 having been hybridised is obtained. By subtracting Tn1 obtained before the hybridisation on the same spot from the thus obtained Tn2, the hybridisation amount of the target DNA can be obtained with respect to each spot. A series of flow including those quality control processes is shown in FIG. 2.

According to this method above, it is possible to detect the target DNA in a non-labelling manner without the need to attach a fluorescence label and the like onto the target DNA, and thus problems in quantitative analysis, such as colour fading, can be solved. Furthermore, since the detection and testing can be conducted in a non-contact manner, it is possible to avoid damage to the microarray.

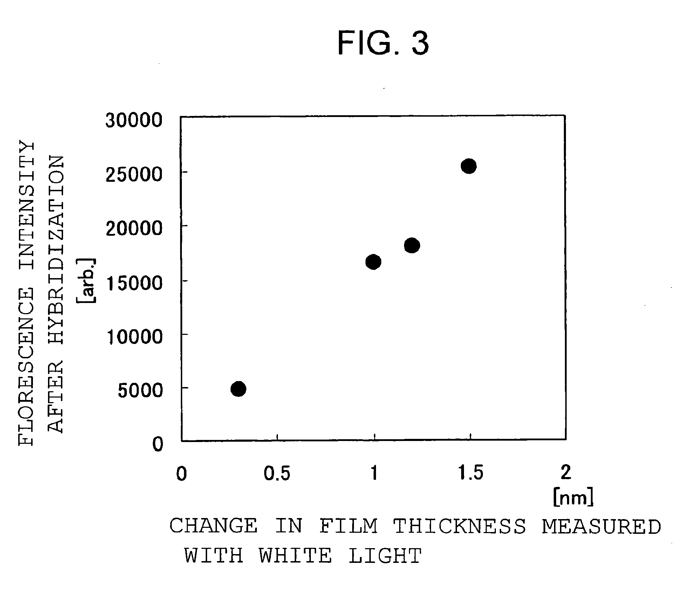

For comparison with the thus calculated hybridisation amount, hybridisation is performed by use of the target DNA on which fluorescence molecules are modified, as a general method, and the hybridisation amount is calculated by use of a fluorescence scanner. Since a reagent Cy5 is employed as a fluorescence molecule, which is manufactured by Amersham Biosciences Corp, a laser of 635 nm is used as an exciting light, and laser scanning is performed on the slide glass. The fluorescence light thus obtained is detected with a space resolving power of 10 µm. There is found a correlation between the hybridisation amount obtained from the fluorescence intensity and the hybridisation amount obtained from the film thickness difference with white light. The result thereof is shown in FIG. 3.

In the case of a conventional method which detects the fluorescence amount, the dynamic range available for the measurement is small. Therefore, if there are many spots on the slide glass, for example, it is difficult to measure the fluorescence amount while maintaining the measurement conditions of the fluorescence scanner unchanged. Consequently, by adjusting the sensitivity of a detector, the dynamic range is expanded. For example, if the voltage applied to a photoelectron multiplier of the detecting system and the laser intensity of the excited light are changed, detection of the all spots is possible. However, if those measuring conditions vary depending on the spot, it is difficult to compare all spots quantitatively.

On the other hand, when the film thickness is measured by use of white light, the absolute film thickness can be obtained with respect to all spots. Therefore, there is an advantage that quantitative comparison is possible as to all spots, or between biochips.

In the present embodiment, a halogen lamp was used as white light source. However, a discharge lamp such as mercury lamp, metal halide lamp, or white LED may be applicable. In the present embodiment, DNA was employed as a biomolecule. However, similar results can be obtained if other biomolecules are employed, such as RNA, protein, PNA, sugar chain, and composites of those elements. In addition, with the method according to the present embodiment, a biomolecule was detected. However, a biochemical reaction may also be detected.

A similar testing and detection can be conducted, when quartz, plastics, metallic coating substrate or the like, besides the slide glass, is used as a substrate, even in any size or shape thereof. In the present embodiment, the diameter of the probe DNAs having been spotted is around 300 µm, but even for other spot sizes, similar testing and detection can be conducted.

While we have shown and described several embodiments in accordance with our invention, it should be understood that the embodiments disclosed are susceptible of changes and modifications without departing from the scope of the invention. Therefore, we do not intend to be bound by the details shown and described herein but intend to cover all such changes and modifications as fall within the ambit of the appended claims.

## Claims

1. A biomolecule thin film measuring method including a process for detecting a biomolecule by use of a biosensor element with probe biomolecules immobilised on a substrate, comprising the steps of
1) mounting on a stage, a biosensor element where the probe biomolecules are immobilised,
2) irradiating said biosensor element with white light,
3) detecting an interference fringe generated by allowing light reflected from said biosensor element to interfere with light reflected from a reference plane,
4) obtaining either the distance or the optical path length between said biosensor element and a source of the white light, either of which maximises the modulation amount of the interference fringe,
5) calculating the three-dimensional shape of the surface of said biosensor element from said distance or optical path length,
6) obtaining the height T1 of a part where the probe biomolecules are immobilised from the three-dimensional shape thus calculated,
7) allowing said biosensor element to react with a solution containing a target biomolecule,
8) performing all steps 1) to 5) above for said biosensor element which has been subjected to the reaction,
9) obtaining the height T2 of a part where the probe biomolecules are immobilised from the three-dimensional shape thus calculated, and
10) calculating the difference (T2 - T1) between T2 obtained in step 9) and T1 obtained in step 6).

2. A method for manufacturing a biosensor element having probe biomolecules immobilised on a substrate, comprising the steps of
1) mounting on a stage a biosensor element having the probe biomolecules immobilised,
2) irradiating said biosensor element with white light,
3) detecting an interference fringe generated by allowing light reflected from said biosensor element to interfere with light reflected from a reference plane,
4) obtaining either the distance or the optical path length between said biosensor element and a source of said white light, either of which maximises the modulation amount of the interference fringe,
5) calculating the three-dimensional shape of the surface of said biosensor element from said distance or optical path length,
6) obtaining the average height T1 on a part where the probe biomolecules are immobilised and the height variations Cv1, and
7) conducting a quality control of said probe biomolecules with the thus obtained T1 and height variations Cv1.

3. A method for manufacturing a biosensor element having probe biomolecules immobilised on a substrate, comprising the steps of
1) mounting on a stage a biosensor substrate in a state prior to having the probe biomolecules immobilised,
2) irradiating said substrate with white light,
3) detecting an interference fringe generated by allowing light reflected from said substrate to interfere with light reflected from a reference plane,
4) obtaining either the distance or the optical path length between either the biosensor element or the substrate and a source of the white light, either of which maximises the modulation amount of the interference fringe,
5) calculating the three-dimensional shape of the surface of said substrate from said distance or optical path length,
6) obtaining surface variations Cv1 from the thus obtained three-dimensional shape, and
7) conducting a quality control of said probe biomolecules with the thus obtained variations C1.
